# EUROPEAN PATENT APPLICATION

(11) **EP 0 768 035 A1**
(43) Date of publication of application: **16.04.1997**
(21) Application number: 96115872.2
(22) Date of filing: 03.10.1996
(51) Int. Cl.: A01N 59/00

(54) **Inter-tidal algal control**

(30) Priority: 10.10.1995 GB 9520684
(71) Applicant: SOLVAY INTEROX LIMITED, Warrington, Cheshire WA4 6HB (GB)
(72) Inventor: Fraser, John Angus, Pownall Park, Wilmslow, Cheshire SK9 5DS (GB)
(74) Representative: Pearce, Timothy

(57) **Abstract**

Shoreline structures such as dock steps, jetties and slipways, which are covered at high tide and exposed by low tide are colonised by inter-tidal-algae which render the surfaces slippery. There is consequently a risk that persons, livestock or vehicles crossing them will skid or slip resulting in accidents and causing personal injury or damage to property. The inter-tidal algae can be controlled by periodic treatment with aqueous hydrogen peroxide solution having a concentration of between 2.5 and 5% w/w without leaving undesirable residuals that could enter the marine food chain and without harming local populations of beneficial invertebrates.

## Description

This invention relates to a process for the control of inter-tidal algae, particularly to the control of such algae on surfaces of structures that are covered at high tide and exposed at low tide and more particularly on an access-way surface.

Shoreline structures such as dock-steps, slipways and jetties provide passageways for people, livestock and transport to access moored boats or ships, the inter-tidal zone of the shore, and to enter the sea. Such passageways often include horizontal or inclined surfaces, including walkways, ramps and steps which are covered at high tide, but are exposed at low tide. Inter-tidal algal species, of which the gross species are sometimes called seaweed by the general public, can colonise such surfaces and can render them slippery, particularly as a result from the high quantities of mucilage that such flora produce in order to protect their tissues from desiccation when exposed to the air. Mucilage from algae can also be supplemented by that produced by blue green bacteria which can colonise the surface near high water. A slippery mucilage bearing surface presents a hazard to users of the steps, slipway or jetty, and has caused many accidents, such as slipping and falling of people and livestock resulting in them twisting, dislocating or breaking their bones or suffering from abdominal injuries or cranial injuries and skidding of vehicles into the sea or collision with people or property. Such accidents are not only painful or traumatic for the persons involved in the accidents, but can also render the owner of the accessway liable to pay compensation.

Accordingly, it has been recognised that means are required to ameliorate or eradicate the detrimental effects of the inter-tidal algae, often by removing them. Hitherto a number of physical and chemical methods have been either proposed or employed for treating such surfaces during the period when they are exposed by the tide. Such exposure periods can be quite short, so that in itself imposes constraints on the nature of the treatment. Also, whilst the surface is being treated, it is unavailable to serve its primary function, namely to permit access by people and/or land transport.

Amongst a range of chemical treatments, strong mineral acids and strong alkali have been employed, but their use raises other safety or compensation issues, particularly regarding residues remaining on the surfaces which can subsequently come into contact with users of the slipway or jetty. Organic disinfectants such as formaldehyde have been used, but there has been a growing concern about the use of such materials in the environment, because, for example, formaldehyde is now recognised to be carcinogenic. More recent developments have included the use of herbicides, but their use and in particular their residues pose environmental problems, including, for example the risk of poisoning marine invertebrates such as limpets or barnacles in the vicinity of the treatment zone, and particularly during their early period of growth. It is not merely advantageous to preserve local invertebrates from the philosophical standpoint that the local ecology should be disturbed as little as possible, but from a practical standpoint, invertebrates such as mobile herbivorous gasteropods (grazing molluscs) by the acts of grazing and passage across the surface tend to clean the surface and roughen it. Thus if they were to be killed or prevented from reproducing locally, their beneficial contribution to safety of the surfaces would be lost.

A physical treatment method can avoid the environmental disadvantages inherent in such aforementioned chemical treatments, but a mild treatment such as brushing is by itself incapable of removing the algae to an acceptable extent. More aggressive treatments such as power washing with water jets can be effective in the short term at removing the algae, but they shorten the life of the structure, which is often made from concrete, because the force of the treatment damages and erodes the exposed layer. The damage is cumulative from repeat treatments. In addition, recolonisation by algae on power-washed jetties is often rapid, and disadvantageous. New algal growths are particularly slippery because the growing algae are particularly capable of generating mucilage. Consequently, it is necessary to power-wash frequently, which is undesirable on account of the surface damage.

The problem remains of how to control inter-tidal algae on shore-line marine structures within the time limits on treatments imposed by the falling and rising tides, without deleteriously affecting local marine invertebrates to an unacceptable extent and without unduly shortening the life of the structure.

It is a first object of certain aspects of the present invention to provide a process for controlling inter-tidal algae which avoids or mitigates the problem identified above.

According to the present invention, there is provided a process for controlling inter-tidal algae growing on marine structures in which algae which have been exposed by a falling tide are brought into contact with an aqueous solution of hydrogen peroxide having a concentration of from about 2.5 to 5% w/w.

Advantageously, it has been found that application of hydrogen peroxide in such a concentration range can effectively control, ie kill or render inviable a significant fraction of the algae such that the safety of the treated surface is improved to a detectable and beneficial extent. The algae that are so treated can no longer produce the mucilage and in many instances they will be washed off the surface by successive tides. A lower concentration is detectably less effective against the algae. Moreover, treatment in such a narrow concentration range has been observed to permit sedentary crustacea such as barnacles and mobile herbivorous gasteropods to survive and spawn. A significantly higher concentration of hydrogen peroxide would not only be unnecessary for the control of the algae, but would deleteriously affect the invertebrate fauna, such as the sedentary crustacea or gasteropods, ie kill or prevent them from spawning successfully. It will be recognised that the range of hydrogen peroxide concentrations of the present invention is also effective at killing and controlling blue-green bacteria (cynaobacteria) which can co-colonise the algae-colonised surfaces, especially near high water level.

It is particularly desirable to employ a hydrogen peroxide concentration in the range of from about 4 to 4.5% w/w.

It will be recognised that cleansing/disinfectant compositions include, in many instances, wetting agents or surfactants. It is a feature of preferred embodiments of the compositions employed in the present invention process that such wetting agents or surfactants are unnecessary and are absent, thereby avoiding the discharge of such agents into the sea.

The hydrogen peroxide solution can be contacted with the algae-covered surface by low pressure spray or sprinkling or the like, often gravity -fed. For small areas or for supervised application, a hand-held watering can (preferably made from or lined with a material resistant to dilute hydrogen peroxide) can be employed, desirably equipped with a simple rose or spray bar or even with an unrestricted spout. For larger areas a mobile tank equipped with spray bar can be used, towed for example by a tractor or tracked vehicle.

The hydrogen peroxide treatment is preferably employed in conjunction with brushing, preferably using a brush with hydrogen peroxide-resistant bristles such as those made from polypropylene. Brushing can encourage the physical removal of dead or dying algae. In such combined treatments, the hydrogen peroxide solution is sprayed or poured onto the surface bearing the algal growth and swept across the surface with the brush. The resultant peroxide-treated and brushed surface can be relatively slow to be recolonised by virtue of the combination of chemical treatment and physical removal. It will be recognised that brushing is often carried out in the period after application of the hydrogen peroxide and before the tide rises to recover the treated surface, but that it can also be carried out at the same time as the peroxide treatment to encourage the peroxide solution to be distributed across the surface and enter pores or even prior to peroxide treatment to remove gross algae (large seaweed) and thereby expose more effectively the surface to the peroxide treatment. In addition, where the surfaces are subject to partial coverage with sand or gravel, it is often desirable to sweep such coverings off the surface before applying the hydrogen peroxide solution or to apply the solution to both the sand covered surface and to the swept surface.

It will be recognised that a treated slipway or jetty should remain out of normal use whilst a significant concentration of treatment chemical remains. One of the principal advantages of the invention process is that it is not only effective for the desired purpose, but the hydrogen peroxide is also deactivated rapidly after contact with a solid surface such as concrete. Measurements indicated that it ceased to be detectable within about 10 minutes of spraying or sprinkling. As a consequence, the period during which the slipway or jetty is out of use is relatively short, often no more than about 20 minutes after the hydrogen peroxide has been applied. Moreover, the residue from hydrogen peroxide comprises water and oxygen, thereby ensuring that there is no significant pollution arising from concentrations of harmful residuals from a chemical treatment than can have undesirable side-effects in the marine food chain, as can be the case from herbicides.

The process according to the present invention is often employed at a dosage selected in the range of from 0.05 to 0.5 litres of hydrogen peroxide solution per square metre, and often a target dose range is from 0.15 to 0.25 litres per square metre. For the treatment of a heavily colonised site, a higher dose can be contemplated, such as from 0.5 to 1 litres per square metre of surface. Where the surface is subject to rapid run-off, such as on steeply inclined slipways or ramps, it may be desirable to spray or sprinkle the surface more than once during a treatment, leaving a few minutes between sprinklings. Additionally, spot treatment of resistant areas can be contemplated where they are observed. The rapid deactivation of hydrogen peroxide after treatment renders it practicable to employ, if desired, a plurality of doses to all but the area closest to low tide level. Such variations in the treatment regime are within the spirit of the present invention.

The interval between treatments according to the present invention is at the discretion of the process operator and depends on the extent of recolonisation which he is willing to tolerate. The extent of recolonisation is often a function of the time of year and local variations in the predominating algal species, the local tides, the weather and exposure of the surfaces to the tides. The treatment interval is often selected in the period of from 5 days to 2 months, and in many practical instances a reasonably regular treatment at an interval of from 10 days to 4 weeks can be successful.

A wide range of algal species can be treated according to the present invention and the predominant species will depend inter alia on location of the surface relative to high and low tide, ie to the length of time that the algal species is exposed before it is covered again by a flood tide. The treatable algal species observed in trials of the process include brown algae such as Fucus vesiculosis, F spiralis, and F serratus, Ralfsia verruc, Pilayella littoralis, Pelveltia canalliculata, Claydostephus spongiosus, and Scytosiphon lomentaria, green algae such as Enteromorpha compressa, E intestinalis and E linza, Ulothrix flacca and U speciosa, Urospora penicilliformis, Ulva lactuca, Blidingia minima and Spongomorpha arcta, and red algae such as Porphyhra umbilicalis, Phytolithon lenormandii, Mastocarpus stellatus, Rhodochorton floridulum, Chondrus crispus, Laurencia hybrida,and L caespitosa, Dumontia contorta and Ceramium rubrum. The invention treatment can also control blue-green cynaobacteria such as Entophysalis duesta, Calothrix crustacea and Microcoleus lyngbyaceus, lichens such as Verrucaria maura and diatoms such as Achnanthes longpipes, Navicula ramosissima and N grevilleana and Melosira nummuloides. Such species vary in their susceptibility, and accordingly it will be understood that for the more delicate forms such as Entemorpha compressa, eradication can be achieved whereas for more robust forms, such as Fucus spiralis, the rate of depopulation was slower.

Amongst invertebrates which have been observed in trials to survive the treatment of the present invention, though often with bleached shells in comparison with untreated invertebrates, can be mentioned barnacles such as Balanus ballanoides and Semi-balanus crenatus, Mytilus edulis, glades of limpets Patella vulgata and grazing snails (winkles) such as Littorina littorea, including at various times of the year adults and juveniles.

The surfaces for which the present invention process are especially suitable include surfaces of concrete, cement, stone, brick and wood and any other material which can act as a support for inter-tidal algae.

Having described the invention in general terms, specific embodiments thereof are described in greater detail by way of example only.

### Example 1

In this Example, a gently sloping concrete slipway was treated which extended from above high tide to neap low tide and was bounded by sand. The slipway was divided vertically to provide control areas that were untreated in addition to the treated areas, and horizontally into 4 zones that were visibly populated by ranges of inter-tidal species in which the main respective species (from shore to sea) were as follows:-
Zone 1 (highest) - Blue-green Bacteria/black lichens - Entophysalis
Zone 2 (2nd highest) - Fucus spiralis
Zone 3 (2nd lowest) - Entermorpha compressa
Zone 4 (lowest) - Fucus serratus
Each zone was treated fortnightly over a trial period of 4 months by sprinkling onto the surface from a peroxide-resistant watering can an aqueous solution of hydrogen peroxide at a concentration of 4.4%, obtained by dilution with demineralised water of technical grade 35% hydrogen peroxide and at the dose rates of respectively
zone 1 - 0.08 l/m².
zone 2 - 0.20 l/m².
zone 3 - 0.23 l/m².
zone 4 - 0.13 l/m².
After the hydrogen peroxide solution had been applied, the surface was swept manually with a heavy-duty domestic broom having polypropylene bristles of length about 8cm. It was observed that the growth of inter-tidal algae was effectively controlled by the treatment and brushing and that the next tide washed them away. The exposed surface became much lighter in colour by the end of the trial and were manifestly free from any significant populations of inter-tidal algal species, despite the adjacent control areas which could act a local source for repopulation. By comparison, at the end of the trial, there were very noticeable large patches of inter-tidal algal species in the control areas.

On four occasions, the residual concentration of hydrogen peroxide in the surface solution in each zone was measured 20 minutes after it had been sprinkled onto the slipway by inspection of commercially available peroxide detection contact strips. On three occasions, no peroxide was detected and on a fourth occasion (in winter) a residual concentration of between 5 and 15 mg/l was detected, indicating that the concentration of the hydrogen peroxide had fallen by at least 99.97%, and confirming that it no longer posed a hazard to users of the slipway beyond that posed simply by water and that the treatment would not leave any significant peroxide residual in the environment.

### Example 2

In this Example, a steeper concrete slipway that was infested with the same and other inter-tidal algal species of the classes identified hereinbefore was treated with 4.4% aqueous hydrogen peroxide solution in the manner of Example 1, but at a dose rate of 0.22 l/m². The slipway was also populated with a range of invertebrates, including limpets, snails and barnacles.

At the end of the trial, which spanned the early spring, it was observed that the treated areas had been cleansed of algae and bleached, whereas an adjacent control area was still heavily populated with algae. Additionally, though, the slipway still supported its population of limpets snails and barnacles, and close observation showed that the spring settlement of juvenile barnacles (cyprid larvae) had continued to occur during the treatment period, thereby demonstrating that the treatment process had enabled the resident invertebrates to survive, even during the sensitive juvenile/larvae stage.

## Claims

1. A process for controlling inter-tidal algae growing on marine structures in which algae which have been exposed by a falling tide are brought into contact with an aqueous solution of hydrogen peroxide having a concentration of from about 2.5 to 5% w/w.

2. A process according to claim 1 characterised by employing a hydrogen peroxide solution at a concentration of from 4 to 4.5% w/w.

3. A process according to either preceding claim characterised in that the marine structure comprises a slipway, jetty or steps acting as an accessway for persons, livestock or land transport that is covered by high tide and exposed by low tide.

4. A process according to any preceding claim in which the marine structure has a concrete surface.

5. A process according to any preceding claim in which the inter-tidal algal species present before treatment comprises one or more species from the range of Entophysalis deusta, Fucus spiralis, Entermorpha compressa and Fucus serratus.

6. A process according to any preceding claim in which the marine structure bears or is located adjacent to a colony of one or more marine invertebrates selected from barnacles, limpets or snails.

7. A process according to any preceding claim characterised in that the hydrogen peroxide solution is employed at a dose of from 0.05 to 0.5 l/m².

8. A process according to any preceding claim characterised in that the interval between treatments is selected in the range of from 10 days to 1 month.

9. A process according to any preceding claim characterised in that the hydrogen peroxide solution is applied by sprinkling or spraying.

10. A process according to any preceding claim which is accompanied by or followed by a mechanical sweep.
